(19) Europäisches Patentamt / European Patent Office / Office européen des brevets

(11) **EP 3 115 908 A1**

(12) **EUROPEAN PATENT APPLICATION**

(43) Date of publication:
**11.01.2017 Bulletin 2017/02**

(51) Int Cl.:
***G06F 17/30*** (2006.01)

(21) Application number: **15306124.7**

(22) Date of filing: **08.07.2015**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA**<br><br>(71) Applicants:<br>• **Thomson Licensing**<br>  **92130 Issy-les-Moulineaux (FR)**<br>• **INRIA - Institut National de Recherche en Informatique et en Automatique**<br>  **78150 Le Chesnay (FR)** | (72) Inventors:<br>• **LE SCOUARNEC, Nicolas**<br>  **35576 Cesson-Sévigné (FR)**<br>• **ANDRE, Fabien**<br>  **35576 Cesson-Sévigné (FR)**<br>• **KERMARREC, Anne-Marie**<br>  **35042 Rennes Cedex (FR)**<br><br>(74) Representative: **Huchet, Anne**<br>**TECHNICOLOR**<br>**1-5, rue Jeanne d'Arc**<br>**92130 Issy-les-Moulineaux (FR)** |

(54) **METHOD AND APPARATUS FOR MULTIMEDIA CONTENT INDEXING AND RETRIEVAL BASED ON PRODUCT QUANTIZATION**

(57) A technique for efficient multimedia content indexing, search and retrieval is proposed based on Product Quantization (PQ) codes, by using the processor more efficiently to make the scanning faster. The technique indexes a multimedia content database according to a depth-first tree structure based on index groups, each group represented by at least one bit per sub-quantizer, and performs the search by storing in a fast access memory distance table segments for at least one index group at a time. The $m \times b$ PQ code may be transformed from an original $(2 \times m) \times (b/2)$ PQ code.

Figure 8A

**Description**

TECHNICAL FIELD

The present principles relate to multimedia content indexing, search and retrieval.

BACKGROUND

Recent interest in object recognition has yielded a wide range of approaches to describing the contents of an image. One important application for this technology is the visual search of large collections of images, such as those on the Internet, which contains billions of images, or on people's home computers. A common theme is the representation of the image as a collection of feature vectors and the use of efficient data structures to handle the large number of images. Methods for efficiently searching this incredibly rich resource are vital for a large number of applications.

Indexing, searching and retrieving image content consist of several steps, including:

i. Extracting descriptors of the content that are generally high dimensional vectors (*e.g.*, 128 floats per Scale Invariant Feature Transform - SIFT image descriptor, 960 floats for GIST image descriptor);
ii. Storing these descriptors for later access;
iii. Performing a query by finding the descriptors that are the closest to a query descriptor.

This procedure can also be followed by a post-search verification step (geometric verification, re-ranking, etc.). These techniques were initially developed for image content but extend beyond image indexing to the more general problem of approximate nearest neighbor search in database of numerical vectors of high dimensionality representing multimedia content (*e.g.,* image, audio, video, text, user profile data, etc. or a combination). For example, time series analysis can imply matching sub-sequences to a motif (descriptors) database to find the closest known motif when presented a sub-sequence of time series. In this case, high dimensionality vectors are also encountered, since a measurement every 30 seconds over 1 hour leads to a vector of 120 floats. Applications include object recognition (face, fingerprint, eye or iris, document, text, etc.), computer graphics, personal photo collections and online image search tools, artificial intelligence and robotics, where a machine must search and recognize countless objects, etc.

A traditional approach consists in organizing the descriptors in a spatial structure (*e.g.,* KD-tree) that allows dividing the space into cells and to search a subset of the cells for the closest descriptors. However, since the vectors have a high dimension, the efficiency of such structure is reduced due to a problem known as "the curse of dimensionality", forcing it to explore a significant part of the space. Intuitively, if the query vector belongs to a cell c, its closest neighbor may also be in any neighboring cell of c. As the dimension increases, the number of neighboring cells increases exponentially. As a consequence, the ability to prune the search space is reduced, forcing it to explore the "whole" space. This is problematic since computing the distance to each other descriptor is costly, and the base may not fit the main memory (RAM) requiring costly I/O with disks or Solid State Drives (SSD).

A recent development regarding approximate nearest neighbor in high dimensional space are Product Quantization (PQ) codes, which aim at reducing computational cost and the size of the representation. PQ codes were introduced in the seminal paper "Product Quantization for Nearest Neighbor Search", by H. Jegóu, M. Douze and C. Schmid, published in the IEEE Transactions on Pattern Analysis and Machine Intelligence, 2011, vol. 33 (1), pp.117-128. Even though PQ codes were initially developed and evaluated in the context of images, they can be generally applied to the problem of nearest neighbor search and, as such, are not specific to image processing. More generally, PQ codes can be useful in any application involving approximate nearest-neighbor search of multimedia content such as pattern mining in time series analysis, clustering, classification, etc.

In PQ codes, the whole space may be partitioned around a set of reference descriptors chosen (e.g., using K-means) to be coarse quantizers. A descriptor is then allocated to the cluster of its closest coarse quantizer. In addition, the residual (*i.e.,* the difference between the descriptor and the reference descriptor) is quantified using a fine quantizer of reference residuals (*e.g.,* obtained using K-means). For a vector of dimension $D$ *(e.g., D* = 128 or 960), each group of $D^* = D/m$ is quantified to one of the $k^* = 2^8$ or $2^{16}$ symbols that correspond to reference residuals (*e*.g., obtained using a K-means). The residual descriptor is thus stored as $D^* \times b$ bits, where $b = log_2 k^* = 8$ or 16 bits instead of $D$ floats. Common values for $m$ are 8 or 4, leading to a representation of each descriptor taking *only* $B = m \times b = 64$ bits of memory, for a total number of descriptors $k = 2^{64}$. Hence, the whole database can fit in the main memory of a server. (a server costing $12,000.00 nowadays can contain $2 \times 10$ cores and a 384 GB RAM)

To perform a query, the query descriptor is compared to all reference descriptors (coarse quantizer) and the closest partition(s) is (are) scanned to find the nearest neighbors of the query descriptor. For each partition, the distance between the query descriptor and the descriptors corresponding to reference residuals are computed. The estimated distance between the query descriptor and the quantified descriptor is then the sum of the distances between the query descriptor and the descriptors corresponding to the reference residuals.

While PQ codes are more efficient than previous techniques thanks to the more compact representation and a more efficient way of computing distances, they require scanning large portions of the database and the actual performance of the scanning (2.5 GB/s per core, on Intel Haswell processors) is far below the theoretical attainable performance of the processor (*i.e.*, the memory bandwidth which is around 15 GB/s per core).

It is therefore of interest to propose more efficient strategies for indexing, search and retrieval of multimedia content. The present principles provide such a strategy.

SUMMARY

The present principles provide a technique for efficient multimedia content indexing, search and retrieval.

According to one embodiment of the present principles, a method of indexing multimedia content for the purpose of retrieval, the method including: accessing a multimedia content database comprising a plurality of database multimedia content items represented according to a $m \times b$ Product Quantization (PQ) code; generating a depth-first tree structure of index groups, each group represented by at least one bit from each sub-quantizer; and storing each database multimedia content item in its respective index group.

According to one embodiment of the present principles, a method of multimedia content retrieval including: accessing a multimedia content database comprising a plurality of database multimedia content items represented according to a $m \times b$ Product Quantization (PQ) code and indexed according to the method of indexing described above; accessing a distance table for a query multimedia content item according to the $m \times b$ PQ code, wherein the distance table is stored in at least one first memory; storing in at least one second memory a distance table segment including at least one index group, wherein the at least one second memory permits a faster access than the at least one first memory; performing a search between the query multimedia content item and the plurality of database multimedia content items contained in the at least one index group by accessing the at least one second memory; and retrieving at least one database multimedia content item, wherein the at least one database multimedia content item is the closest at least one database multimedia content item from the query multimedia content item.

According to one embodiment of the present principles, the method further includes: repeating the steps of storing and performing for at least one segment of the distance table.

According to one embodiment of the present principles, the method further includes: transforming a $(2 \times m) \times (b/2)$ PQ code into a $m \times b$ PQ code by quantizer concatenation prior to the step of accessing a plurality of database multimedia content items.

According to one embodiment of the present principles, the step of transforming further includes: concatenating multimedia content item components for each query and database multimedia content item for every 2 out of $2 \times m$ components; and generating a $m \times b$ PQ code distance table by concatenating distance values from the $(2 \times m) \times (b/2)$ PQ code distance table for every 2 out of $m$ sub-quantizers.

According to one embodiment of the present principles, the step of performing a search further comprises: calculating a query-database distance between a query multimedia content item and a database multimedia content item based on the distance table; discarding said database multimedia content item if the query-database distance or if partial values of the distance during the calculating step are higher than a threshold; and updating the threshold if the query-database distance is smaller than the threshold.

According to one embodiment of the present principles, the step of discarding may further include: discarding at least one index group if no database multimedia content item in the at least one index group may have a distance to the query multimedia content item smaller than the threshold.

According to one embodiment of the present principles, the multimedia content is quantized according to a coarse quantizer and $m$ residual sub-quantizers and is stored in accordance with an inverted file architecture.

According to one embodiment of the present principles, the retrieved at least one database multimedia content item has a coarse quantizer level within a window w from the coarse quantizer level of the query multimedia content item.

According to one embodiment of the present principles, an apparatus for indexing multimedia content for the purpose of retrieval, the apparatus including a processor, for receiving at least one input/output; and at least one memory in signal communication with the processor, the processor being configured to: access a multimedia content database comprising a plurality of database multimedia content items represented according to a $m \times b$ Product Quantization (PQ) code; generate in the at least one memory a depth-first tree structure of index groups, each group represented by at least one bit from each sub-quantizer; and store each database multimedia content item in its respective index group of the at least one memory.

According to one embodiment of the present principles, an apparatus for multimedia content retrieval, the apparatus including a processor, for receiving at least one input/output; at least one first memory, and at least one second memory in signal communication with the processor, wherein the at least one second memory permits faster access from the processor than the at least one first memory, the processor being configured to: access a multimedia content database comprising a plurality of database multimedia content items represented according to an $m \times b$ Product Quantization (PQ) code and indexed according to the apparatus for indexing described above; access a distance table for a query multimedia content item represented according to the $m \times b$ PQ code, wherein the distance table is stored in the at least one first memory; store in the at least one second memory a distance table segment including at least one index group; perform a search between the query multimedia content item and the plurality of database multimedia content items contained in the at least one index group by accessing the at least one second memory; and retrieve at least one database multimedia content item, wherein the at least one database multimedia content item is the closest at least one database multimedia content item from the query multimedia content item.

According to one embodiment of the present principles, the processor is further configured to: store and perform a search for at least one segment of the distance table.

According to one embodiment of the present principles, the processor is further configured to: store and perform a search for at least one segment of the distance table.

According to one embodiment of the present principles, the processor is further configured to: transform a $(2 \times m) \times (b/2)$ PQ code into a $m \times b$ PQ code by quantizer concatenation prior to accessing a plurality of database multimedia content items.

According to one embodiment of the present principles, the processor transforms by being further configured to: concatenate multimedia content item components for the query and database multimedia content items for every 2 out of $2 \times m$ components; and generate a $m \times b$ PQ code distance table by concatenating distance values from the $(2 \times m) \times (b/2)$ PQ code distance table for every 2 out of $m$ sub-quantizers.

According to one embodiment of the present principles, the processor performs a search by being further configured to: calculate a query-database distance between a query multimedia content item and a database multimedia content item based on the distance table; discard the database multimedia content item if the query-database distance or if partial values of the distance during the calculation are higher than a threshold; and update the threshold if the query-database distance is smaller than the threshold.

According to one embodiment of the present principles, the processor discards by being further configured to: discard at least one index group if no database multimedia content item in the at least one index group may have a distance to the query multimedia content item smaller than the threshold.

According to one embodiment of the present principles, the multimedia content is quantized according to a coarse quantizer and m residual sub-quantizers and is stored in accordance with an inverted file architecture.

According to one embodiment of the present principles, the retrieved at least one database multimedia content item has a coarse quantizer level within a window w from the coarse quantizer level of the query multimedia content item.

Additional features and advantages of the present principles will be made apparent from the following detailed description of illustrative embodiments which proceeds with reference to the accompanying figures.

## BRIEF DESCRIPTION OF THE DRAWINGS

The present principles may be better understood in accordance with the following exemplary figures briefly described below:

Figure 1 illustrates a prior art inverted file architecture for a product quantizer;

Figure 2 illustrates an exemplary database and distance calculation for a $4 \times 16$ PQ code according to the present principles;

Figure 3 illustrates the cache hierarchy for the Intel Haswell processor;

Figure 4 illustrates an exemplary database and distance table calculation for a $2 \times 32$ PQ code transformed from the $4 \times 16$ PQ code example of Figure 2 according to the present principles;

Figure 5 illustrates an exemplary database for a $4 \times 16$ PQ code according to the present principles;

Figure 6 illustrates an exemplary database re-arrangement for the $4 \times 16$ PQ code example of Figure 5 according to the present principles;

Figure 7 illustrates an exemplary flowchart of a method of indexing multimedia content according to the present principles;

Figure 8 (A, B and C) illustrates an exemplary flowchart of a method of multimedia content retrieval according to the present principles; and

Figure 9 illustrates a block diagram of a computing environment within which the present principles may be implemented and executed.

## DETAILED DISCUSSION OF THE EMBODIMENTS

The present principles provide a technique for efficient multimedia content indexing, search and retrieval based on PQ codes, by using the processor more efficiently to make scanning faster. This translates in reduced operating costs for an image indexing service (*i.e.*, less servers and lower power consumption), as well as an enhanced quality of service (*i.e.*, a reduced delay for providing users with the answer to its query).

Formally, a quantizer is a function *q* mapping a *D*-dimensional vector $x \in \mathcal{R}^D$ to a vector $q(x) \in C = \{c_i; i \in I\}$, where the index set *I* is from now on assumed to be finite: $I = 0, ..., k - 1$. The reproduction values $c_i$ are called centroids. The set of reproduction values *C* is the codebook of size *k*. The set $v_i$ of vectors mapped to a given index *i* is referred to as a (Voronoi) cell, and defined as:

$$\mathcal{V}_i \triangleq \{x \in \mathcal{R}^D : q(x) = c_i\} \qquad (1)$$

The *k* cells of a quantizer form a partition of $\mathcal{R}^D$. By definition, all the vectors lying in the same cell $v_i$ are reconstructed by the same centroid $c_i$. In order for the quantizer to be optimal, it has to satisfy the Lloyd optimality conditions, the first of which requires that a vector *x* must be quantized to its nearest codebook centroid, in terms of the Euclidean distance:

$$q(x) = \arg\min_{c_i \in C} d(x, c_i) \qquad (2)$$

where d(.,.) is the Euclidean distance between two vectors. The quality of a quantizer is usually measured by the mean squared error between the input vector *x* and its reproduction value *q(x)*.

Considering a 128-dimensional vector, *e.g.,* the SIFT descriptor, a quantizer producing 64-bit codes, *i.e.*, only 0.5 bit per component, contains $k = 2^{64}$ centroids. Therefore, it is impractical to use standard algorithms like Lloyd's algorithm or even HKM (Hierarchical K-Means), as the number of samples required and the complexity of learning the quantizer are several times *k*. It is even impractical to store the $D \times k$ floating point values representing the *k* centroids.

Product quantization is an efficient solution to address these issues, since it allows one to choose the number of components to be quantized jointly. The input vector *x* is split into *m* distinct subvectors $u_j$, $1 \leq j \leq m$ of dimension $D^* = D/m$, where *D* is a multiple of *m*. The subvectors are quantized separately using m distinct quantizers. A given vector *x* is therefore mapped as follows:

$$\underbrace{x_1, ..., x_{D^*}}_{u_i(x)}, \quad ... \quad, x_{D-D^*+1}, ..., x_D \rightarrow q_1(u_i(x)), ..., q_m(u_m(x)) \qquad (3)$$

$$u_i(x) \qquad\qquad u_m(x)$$

where $q_j$ is a low-complexity quantizer associated with the *j*th subvector. The sub-quantizer $q_j$ is associated with the index set $I_j$, the codebook $C_j$ and the corresponding reproduction values $c_{j,i}$.

A reproduction value of the product quantizer is identified by an element of the product index set $I = I_1 \times ...x I_m$. The codebook is therefore defined as the Cartesian product $C = C_1 \times ... \times C_m$ and a centroid of this set is the concatenation of centroids of the *m* sub-quantizers. Without loss of generality, it is assumed that all sub-quantizers have the same finite number $k^*$ of reproduction values. In that case, the total number of centroids is given by:

$$k = (k^*)^m \qquad (4)$$

In the extreme case where $m = D$, the components of a vector *x* are all quantized separately. Then the product quantizer turns out to be a scalar quantizer, where the quantization function associated with each component may be different.

The strength of a product quantizer is to produce a large set of centroids from several small sets of centroids: those associated with the sub-quantizers. When learning (or training) the sub-quantizers using Lloyd's algorithm (which corresponds to K-means clustering), a limited number of vectors is used, but the codebook is, to some extent, still adapted to the data distribution to represent. The complexity of learning the quantizer is *m* times the complexity of performing K-means clustering with $k^*$ centroids of dimension $D^*$.

Storing the codebook $C$ explicitly is not efficient. Instead, the $m \times k^*$ centroids of all the sub-quantizers are stored, *i.e.*, $m \times D^* \times k^* = k^* \times D$ floating point values. Quantizing an element requires $k^* \times D$ floating point operations, which corresponds to the assignment complexity. One can observe that for a fixed number of bits, it is better to use a small number of sub-quantizers with many centroids than having many sub-quantizers with few bits. At the extreme when $m = 1$, the product quantizer becomes a regular K-means codebook.

High values of $k^*$, though, increase the computational cost of the quantizer. They also increase the memory usage of storing the centroids ($k^* \times D$ floating point values), which further reduces the efficiency if the centroid look-up table does no longer fit in cache memory. In the case where $m = 1$, one cannot afford using more than 16 bits to keep this cost tractable. Using $k^* = 256$ and $m = 8$ is often a reasonable choice.

Nearest neighbor search depends on the distances between a query vector $x$ and a database vectors $y$, or equivalently the squared distances. The vectors are compared based on their quantization indices by computing an asymmetric approximate Euclidean distance between the two vectors. According to the Asymmetric Distance Computation (ADC), the database vector $y$ is represented by $q(y)$, but the query $x$ is not encoded. The distance $d(x, y)$ is approximated by the distance $d(x, y) = d(x, q(y))$, which is computed using the decomposition:

$$\tilde{d}(x,y) = d\big(x, q(y)\big) = \sqrt{\sum_{j=1}^{m} d\left(u_j(x), q_j\left(u_j(y)\right)\right)^2} \quad (5)$$

where the squared distances $d(u_j(x), c_{j,i})^2 : j = 1, \ldots, m, i = 1, \ldots, k^*$ are computed prior to the search. In practice, one may not compute the square roots: the square root function is monotonically increasing and the squared distances produce the same vector ranking.

The ADC computation requires the following complexity for the different steps involved in searching the $\ell$ nearest neighbors of a vector $x$ in a dataset $\Upsilon$ of N$= |\Upsilon|$ vectors:

    i. Encoding $x$: 0;
    ii. Computing $d(u_j(x), c_{j,i})$: $k^* \times D$;
    iii. For $y \in \Upsilon$, computing $\tilde{d}(x,y)$: N$\times m$;
    iv. Finding the $\ell$ smallest distances: N$+\ell \log \ell \log \log$ N.

A Symmetric Distance Computation (SDC) may also be employed with similar overall complexity (though the complexity of steps i and ii are exchanged), where both vectors $x$ and $y$ are represented by their respective centroids $q(x)$ and $q(y)$ and where the distance components are read from look-up tables associated with each sub-quantizer. Each look-up table contains all the squared distances between pairs of centroids of the sub-quantizer, or $(k^*)^2$. However, ADC has a better performance than SDC.

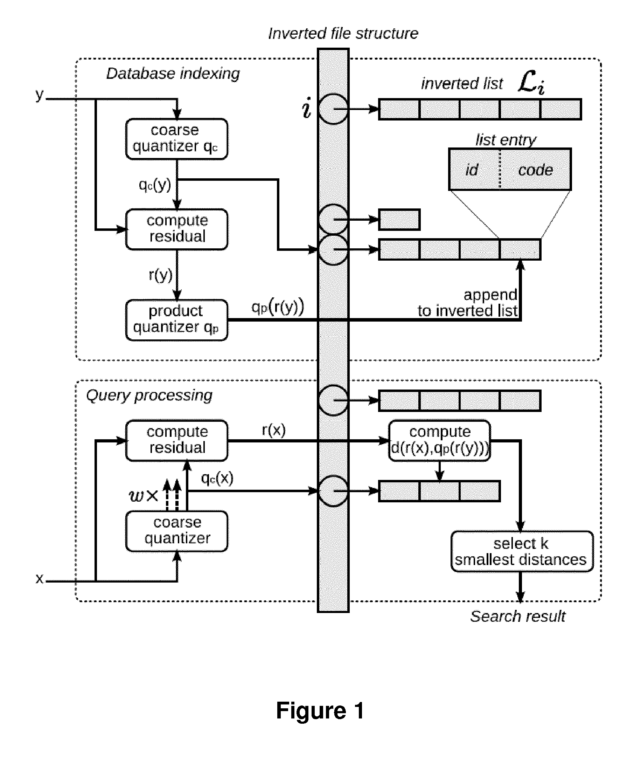

The architecture of the product quantizer may be implemented in a straightforward manner or satisfy an inverted file system, which quantizes the descriptors and stores image indices in the corresponding lists, as described in the seminal paper and illustrated in Figure 1. In the following, and without loss of generality, the product quantizer will be explained in terms of this architecture.

The inverted file system allows rapid access to a small fraction of image indices and was shown successful for very large scale search. Instead of storing an image index only, a small code is added for each descriptor. Here, the difference between the vector and its corresponding coarse centroid is encoded with a product quantizer. This approach significantly accelerates the search at the cost of a few additional bits/bytes per descriptor. Furthermore, it slightly improves the search accuracy, as encoding the residual is more precise than encoding the vector itself.

The codebook for the coarse quantizer $q_c$ is learned using K-means. For SIFT descriptors, the number $k'$ of centroids is typically from one thousand to one million, which is relatively small compared with $k$. In order to take into account the information provided by the coarse quantizer, *i.e.*, the centroid $q_c(y)$ associated with a descriptor vector $y$, the product quantizer $q_p$ is used to encode the residual vector:

$$r(y) = y - q_c(y) \quad\quad (6)$$

corresponding to the offset in the Voronoi cell. The energy of the residual vector is small compared to that of the vector itself. The vector is approximated by:

$$\ddot{y} \triangleq q_c(y) + q_p\big(y - q_c(y)\big) \qquad (7)$$

It is represented by the tuple $(q_c(y), q_p(r(y)))$. By analogy with the binary representation of a value, the coarse quantizer provides the most significant bits, while the product quantizer code corresponds to the least significant bits.

The estimator of $d(x, y)$, between query vector $x$ and the database vector $y$, is computed as the distance $\ddot{d}(x,y)$ between $d(x,y)$, and $\ddot{y}$:

$$\ddot{d}(x,y) = d(x,\ddot{y}) = d\left(x - q_c(y), q_p\big(y - q_c(y)\big)\right) \qquad (8)$$

Denoting by $q_{pj}$ the $j$th sub-quantizer, the following decomposition is used to compute this estimator efficiently:

$$\ddot{d}(x,y) = \sqrt{\Sigma_{j=1}^{m} d\left(u_j\big(x - q_c(y)\big), q_{pj}\big(u_j\big(y - q_c(y)\big)\big)\right)^2} \qquad (9)$$

Similar to the ADC strategy, for each sub-quantizer $q_{pj}$ the distances between the partial residual vector $u_j(x - q_c(y))$ and all the centroids $c_{j,i}$ of $q_{pj}$ are preliminarily computed and stored in a lookup table.

The product quantizer is learned (or trained) on a set of residual vectors collected from a learning set. Although the vectors are quantized to different indices by the coarse quantizer, the resulting residual vectors are used to learn a unique product quantizer. It is assumed that the same product quantizer is accurate when the distribution of the residual is marginalized over all the Voronoi cells. This may give inferior results to the approach consisting of learning and using a distinct product quantizer per Voronoi cell. However, the latter strategy would be computationally expensive and would require storing $k'$ product quantizer codebooks, *i.e.*, $k' \times D \times k^*$ floating point values, which would be memory-intractable for common values of $k'$.

The coarse quantizer is used to implement an inverted file structure as an array of lists $\mathcal{L}_1, ..., \mathcal{L}_{k'}$, as shown in Figure 1. If $\Upsilon$ is the vector dataset to index, the list $\mathcal{L}_i$ associated with the centroid $c_i'$ of $q_c$ stores the set $\{y \in \Upsilon: q_c(y) = c_i'\}$. In inverted list $\mathcal{L}_i$, an entry corresponding to $y$ contains a vector identifier of length 8-32 bits and the encoded residual $q_p(r(y))$ of length $m \log_2 k^*$ bits. The identifier field is the overhead due to the inverted file structure. Depending on the nature of the vectors to be stored, the identifier is not necessarily unique. For instance, to describe images by local descriptors, image identifiers can replace vector identifiers, *i.e.*, all vectors of the same image have the same identifier. Therefore, a 20-bit field is sufficient to identify an image from a dataset of one million.

When searching the nearest neighbors of a vector $x$, the inverted file provides a subset of $\Upsilon$ for which distances are estimated: only the inverted list $\mathcal{L}_i$ corresponding to $q_c(x)$ is scanned. However, $q_c$ and its nearest neighbor are often not quantized to the same centroid, but to nearby ones. To address this problem, a multiple assignment strategy is used: The query $x$ is assigned to w indexes instead of only one, which correspond to the w nearest neighbors of x in the codebook of $qc$. All the corresponding inverted lists are scanned. The multiple assignment strategy is not applied to database vectors, as this would increase the memory usage.

Figure 1 gives an overview of how a database is indexed and searched. Indexing a vector $y$ proceeds as follows:

I1. Quantize $y$ to $q_c(y)$;
I2. Compute the residual $r(y) = y - q_c(y)$ (eq. 6);
I3. Quantize $r(y)$ to $q_p(r(y))$, which, for the product quantizer, amounts to assigning $u_j(y)$ to $q_j(u_j(y))$, for $j = 1, ..., m$.
I4. Add a new entry to the inverted list corresponding to $q_c(y)$. It contains the vector (or image) identifier and the binary code (the product quantizer's indices).

Searching the nearest neighbor(s) of a query $x$ consists of:

S1. Quantize *x* to its w nearest neighbors in the codebook $q_c$; For the sake of presentation, the two next steps simply denote by r(*x*) the residuals associated with these w assignments. The two steps are applied to all w assignments.

S2. Compute the squared distance for each sub-quantizer *j* and each of its centroids $c_{j,i}$: $d(u_j(x-q_c(x)),c_{j,i})^2 = d(u_j(r(x)),c_{j,i})^2$ As a result, a distance table is generated for each *i* and *j* containing the value of the squared distance;

S3. Compute the squared distance between r(*x*) and all the indexed vectors of the inverted list. Using the subvector-to-centroid distances computed in the previous step, this consists in summing up *m* looked-up values in Eq. 9;

S4. Select the $\ell$ nearest neighbors of *x* based on the estimated distances. This is implemented efficiently by maintaining a Maxheap structure of fixed capacity, which stores the $\ell$ smallest values seen so far. After each distance calculation, the point identifier is added to the structure only if its distance is below the largest distance in the Maxheap.

Only step 3 above depends on the database size. Compared with ADC, the additional step of quantizing *x* to $q_c(x)$ consists in computing *k'* distances between *D*-dimensional vectors. Assuming that the inverted lists are balanced, about $N \times w/k'$ entries have to be parsed. Therefore, the search is significantly faster than ADC.

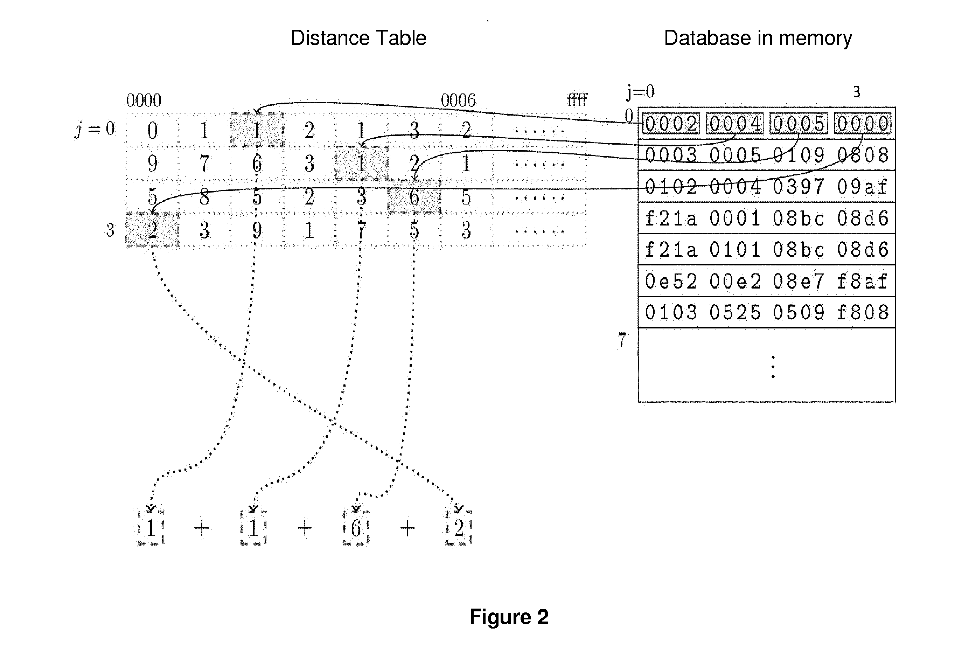

Figure 2 illustrates an exemplary database and distance calculation for a $4 \times 16$ PQ code according to the present principles. In Figure 2, the distance table generated in step S2 above is expressed as a matrix, where each row corresponds to a sub-quantizer *j* = 0, ...,3. The columns of the distance table correspond to the values of *i* = 0, ..., $2^{16}$ - 1 centroids per sub-quantizer (in hexadecimal numbers, h). The database is stored in memory as vectors of 64 bits (16 hexadecimal values) where each row represents a vector *n* and each column *j* represents a centroid of sub-quantizer *j*. Each vector in the database represents multimedia content. Multiple vectors may represent the same multimedia content, as they may represent different characteristic points, parameters or features of the same content, *e.g.,* different poses, or different resolutions of an image. Each component of a database vector addresses the respective row and column of the distance table, with the value of the component (16 bits in hexadecimal representation) corresponding to the column of the distance table. For example, for the first vector (*n* = 0) of the database, its first component (*j* = 0) addresses the element (*j* = 0, *i* = 0002h) of the distance table, which has a distance of 1. This distance value will be added to the other three distance values from the distance table corresponding to the other three components of the first database vector. The result of the addition (1 + 1 + 6 + 2) is the distance (item S3 above) between the database vector and the query vector associated with the distance table in the figure.

Although PQ codes are efficient with respect to the prior art, a simple implementation of these codes still yields a performance far below the theoretical attainable performance of the processor, leaving room for improvement. Without loss of generality, the present principles will be discussed by utilizing the example of PQ codes $m \times 8$ (e.g., $8 \times 8$), product quantizers with the inverted file architecture and searches performed on Intel Haswell processors. However, a similar analysis applies to other PQ $m \times b$ codes, as well as to a straightforward implementation of the codes and to general processors and equivalent hardware implementations.

A pseudo-code of the scan or search is shown in Table 1 below, for 1-NN (Nearest Neighbor) search and for a PQ $m \times b$ code. This code sample can be easily extended to maintain a list of the $\ell$-NN keeping the $\ell$ minimum values. This code implements steps S3 and S4 of the NN search previously described, provided that the table in in step S2 has been calculated. In Table 1, *d*[*j, v*] is the (floating point or integer-represented) distance from the query descriptor for sub-quantizer *j* (from 0 to *m* - 1) and quantified value *v, Q*[*n,j*] is the *n*-th database descriptor quantification (*e.g.,* 8 or 16 bits) for the *j*-th group of coordinates (*i.e.*, one of the centroids $c_{j,i}$) and *N* is the number of database vectors/descriptors to compare against. For the inverted file architecture and w = 1, *N* represents the number of database descriptors associated with the particular coarse quantizer level of interest. For each descriptor *n* from 0 to *N* - 1, and for each of the residual clusters *j* (from 0 to *m* - 1), the distance (dist) is calculated by adding the distances between the reference descriptor and the query vector for each cluster *j*. Then the minimum distance (min_value) and corresponding database vector index *n* is found among the values of *n* from 0 to *N* - 1.

For a straightforward implementation of the product quantizer, the algorithm in Table 1 still applies with small differences. In this case, *N* is the size of the entire database, there is no coarse quantizer and the quantization represented by the *j* clusters applies to the query vector, instead of the residual of the query vector. Hence, the calculated distances are associated with the query and database vectors and not their residuals.

For Intel Haswell processors, the scanning performance for the purpose of computing the distances according to the scan algorithm in Table 1 and a PQ code $m \times 8$ is around 2.5 GB/s per core, while the processor bandwidth is around 15 GB/s per core. A detailed analysis of the computational performance of the reference implementation of PQ codes shows that the current bottleneck is the lookup into the distance table *d*[.,.], which involves memory access or lookup.

Table 1

| 1. Calculate the distance for each reference descriptor *n* in the database: |
| --- |

(continued)

```
min_value = +∞;
min_index = -1;
for n = 0 to N - 1
    dist[n] = .0; // floating point value
    for j=0 to m-1
        dist[n] += d[j,Q [n,j];
    end for
2. Find the minimum distance:
    if dist[n] < min_value
        min_value = dist[n];
        min_index = n;
    end if
    end for
3. Output: min_value and min_index
```

While simple integer operations (*e.g.,* incrementing loop counters) are executed in 1 CPU clock cycle and can be easily pipelined, memory accesses are more costly on modern CPU architectures. The execution time of a memory access varies with the level of cache accessed.

Table 2 summarizes the access latencies and sizes of different levels of cache for Intel architectures. These figures are valid for all Intel architectures released since 2008, *i.e.*, from the Nehalem architecture to the Haswell architecture. On these architectures, each CPU core has its own L1 and L2 caches. The L3 cache is shared between all cores but its size depends on the number of CPU cores and the CPU range. Main memory has much higher latency than any cache level at 100-300 cycles.

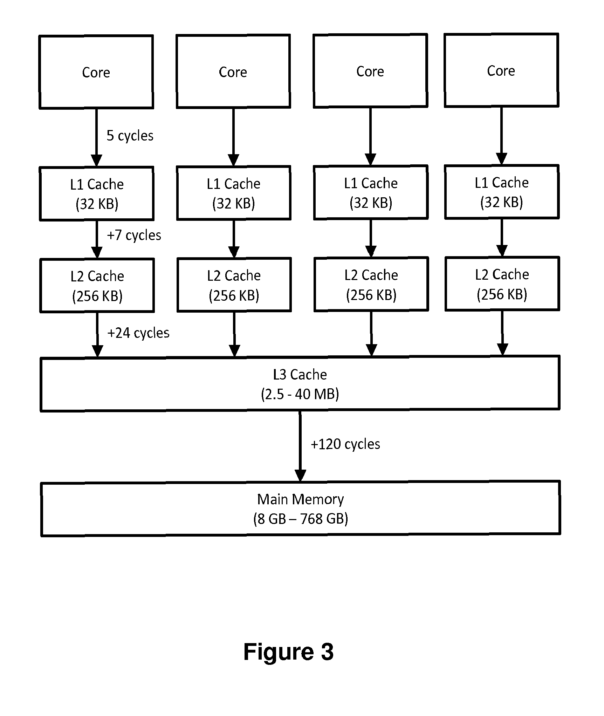

Figure 3 shows the cache hierarchy of the Haswell processor, composed of the three levels, and the number of cycles necessary to access the respective levels, as well as the main memory. Table 2 and Figure 3 illustrate how many more cycles are necessary for deeper layers of the hierarchy and how desirable it is to avoid these deeper layers. For example, for the Haswell processor, only 5 cycles are needed to access the L1 cache as opposed to 5+7+24=36 cycles for the L3 cache. However, even if the distance table is small enough to fit into the L1 cache of the processor, which is the case for $b = 8$ bit symbols, the latency of repeatedly looking up into the table represents a major limitation in speed performance. The problem to be solved is how to perform a faster scan, and therefore, a faster multimedia content search and retrieval based on a PQ code $m \times 8$, and in general, a $m \times b$ PQ code.

Table 2

| Cache | L1 | L2 | L3 |
|---|---|---|---|
| Latency (in cycles) | 4-5 | 11-13 | 25-40 |
| Size | 32 KB | 256 KB | 2-3 MB |

According to one embodiment of the present principles, an improvement in speed performance is proposed which consists in reducing the number of lookups by transforming the PQ $m \times b$ code into an equivalent $(m/2) \times (2 \times b)$ code. By doing this, the number of lookups in the distance table is reduced from $m$ to $(m/2)$. This transformation could be performed multiple times for a reduction to an equivalent $(m/2^s) \times (2^s \times b)$ code, where s is an integer greater than 0. For example, a PQ $8 \times 8$ code is transformed into a $4 \times 16$ code, or even a $2 \times 32$ code. Equivalently, the transformation can be described as consisting in reducing the number of lookups by transforming the PQ $(2 \times m) \times (b/2)$ code into an equivalent $m \times b$ code.

However, taken alone, this transformation is counter-productive as the distance table increases in size, from $(m \times 2^b)$ to $((m/2) \times 2^{2 \times b})$, and more generally to $((m/2^s) \times 2^{2s \times b})$. For example, the PQ $8 \times 8$ code, the distance table grows from $8 \times 256$ floats (or 8 KB), to $4 \times 65536$ floats (or 1 MB). As a consequence, the distance table does not fit into the L1 cache any longer, and lookups to L3 have a much higher latency (from 5 cycles to 36 cycles); thus severely degrading the performance.

In an exemplary embodiment of the present principles, prior to processing, the $8 \times 8$ PQ code is converted into an equivalent $4 \times 16$ code, unless a $4 \times 16$ code is already used. This means that a vector quantified as (*a, b, c, d, e, f, g, h*) is rewritten as (*a¤b, cad, e¤f, g¤h*) in the database, where ¤ is a bit concatenation operator. The distance table $d'$ for the 4 $\times$ 16 code can be computed from the distance table $d$ of the 8 $\times$ 8 code, by computing $d'(a¤b) = d(a)$ + $d(b)$. The concatenation ¤ happens for every two sub-quantizers and for each of the $2^8$ centroids of each sub-quantizer, resulting in $2^8 \times 2^8 = 2^{16}$ centroids of the transformed sub-quantizer.

A skilled artisan will appreciate that the transformed 4 $\times$ 16 code is a sub-optimum 4 $\times$ 16 code, which has the same performance as the original 8 $\times$ 8 code. The optimum 4 $\times$ 16 code achieves a better performance than the 8 $\times$ 8 code but at a much higher computational cost for each query. Indeed, if descriptors have a dimension $D,$ computing $d'$ directly would cost 3 $\times$ $D$ $\times$ $2^{16}$ arithmetical operations. The factor of 3 comes from the fact that each assignment requires one subtraction, one multiplication and one addition per dimension (of the original vector). Therefore, the computational cost, which is a function of the number of arithmetic operations, is 3 times the assignment complexity. However, computing $d$ and deriving $d'$ from the aforementioned transformation formula costs 3 $\times$ $D$ $\times$ $2^8$ + $2^{16}$, representing computational savings. In typical settings, where ($D$ tends to be quite large ($D$ = 128 for SIFT or $D$ = 960 for GIST descriptors), the difference in computation cost can become significant. If this computational cost is not an issue, the optimum 4 $\times$ 16 PQ code (in general, ($m$/2) $\times$ (2 $\times$ $b$) PQ code) can be generated and is preferable, since it results in a better retrieval performance (*i.e.*, match for the query vector).

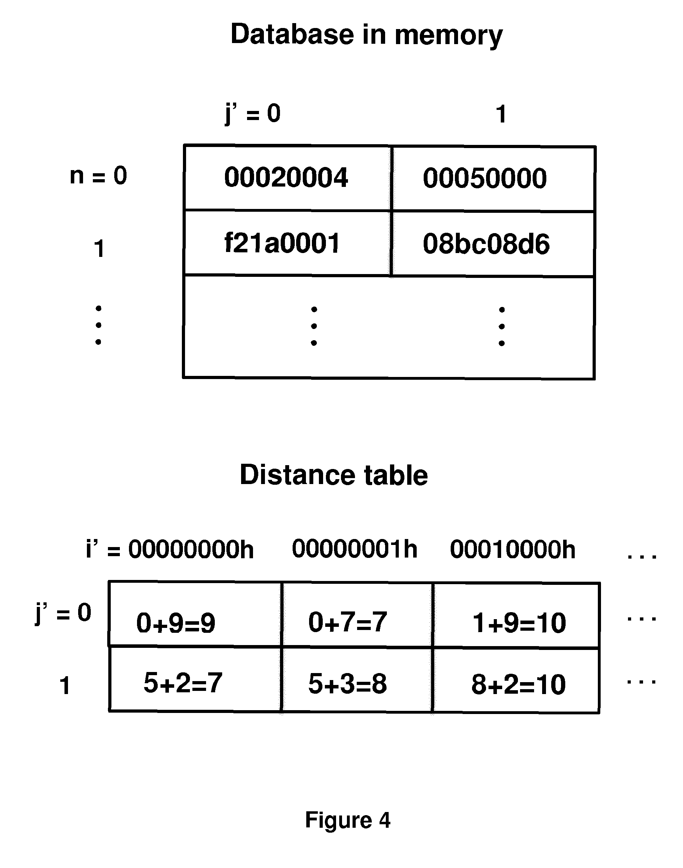

Figure 4 illustrates an exemplary database and distance table calculation for a 2 $\times$ 32 PQ code transformed from the 4 $\times$ 16 PQ code example of Figure 2. In Figure 4, row $j'$ = 0 results from rows $j$ = 0 and $j$ = 1 in Figure 2, and the columns $i'$ result from the concatenation of the corresponding $i$ columns of the original code, resulting in 32 bit numbers (represented in hex). The distances in the table of the transformed code are the addition of the corresponding distance values in the original table. Hence, element ($j'$ = 0, $i'$ = 00000000$h$) has a distance 0 + 9 = 9, since ($j$ = 0,$i$ = 0000$h$) and ($j$ = 1, $i$ = 0000$h$) have respective distances of 0 and 9. Equivalently, row $j'$ = 1 is derived from rows $j$ = 2 and $j$ = 3 of the original distance table. Hence, element ($j'$ = 1, $i'$ = 00010000$h$) has a distance 8 + 2 = 10, since ($j$ = 2, $i$ = 0001$h$) and ($j$ = 3, $i$ = 0000$h$) have respective distances of 8 and 2.

According to one embodiment of the present principles, in order to benefit from a code with a small number of lookups but large distance table, the dataset/database is re-arranged/indexed to enhance memory locality. This is true whether or not the code is transformed. Re-arrangement/indexing is performed by grouping database vectors according to a number $b_{group}$ of bits for at least one sub-quantizer wherein $b_{group}$ may differ per sub-quantizer and may be 0 for at least one sub-quantizer. The bits may be one or more MSB's (Most Significant Bits) of each sub-quantizer representation or a different combination of bits. The grouping associated with this indexing/re-arrangement of the database is hereby named index grouping and index groups.

Hence, accesses to the distance table exhibit spatial and temporal locality even if the table cannot fit entirely in the memory (*e.g.,* L1 cache, large registers). Although the following description is in terms of the L1 cache, it applies to general fast access memories or large register-based memories. Basically, only segments or portions of the distance table are loaded into the L1 cache at a time during the search phase of the algorithm, depending on the particular index group of database vectors being evaluated. Elements of the database are grouped together so that a lookup at a given time uses only a segment of the distance table (including sub-segments for each sub-quantizer), and subsequent lookups are also in close spatial (memory) locality, thus allowing most temporally close lookups to be in the segment already loaded in the L1. This decreases the need for frequent loads into the L1 cache, speeding up the overall system. Since the separate rows of a distance table representing separate sub-quantizers are independent, segments of each row/sub-quantizer of the distance table (also called sub-segments of the distance table) can be independently loaded into L1, creating great flexibility and enhancing the speed performance of the search and retrieval. Which sub-segment(s) of each sub-quantizer to load is (are) identified by the $b_{group}$ bits used to index group the database vectors.

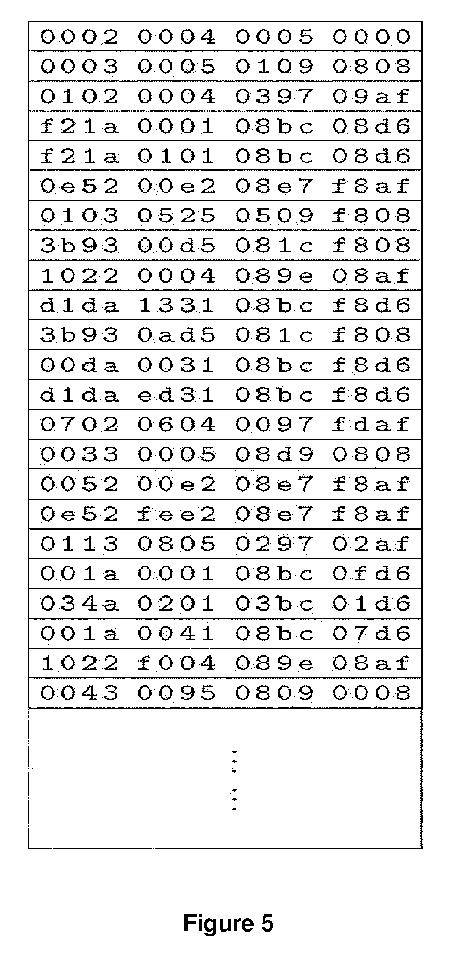

Figure 5 illustrates an exemplary database for a 4 $\times$ 16 PQ code. The figure shows the database in memory as a continuous memory zone which contains vectors of 4 components. In a regular implementation of PQ codes, the database of vectors contains vectors in a random order (the order in which images are stored/processed/indexed). As a consequence, when executing the computation of distance, the lookups into the table of distances exhibit a poor locality (*e.g.,* the access to the first row $j$ = 0 in the distance table can be ($i$ = 0002$h$, 0003$h$, 0102$h$, $f$21$ah$, 0002$h$.... ) rather than having a good locality of access, where subsequent temporal accesses are located as much as possible in the same memory segment of the table: $i$ = 0002$h$, 0002$h$, 0003$h$, 0004$h$, ...,0102$h$, 0103$h$, 0103$h$, 0104$h$, ... ) and then ($i$ =···, $f$21$ah$, $f$21$ah$, $f$21$bh$, $f$21$ch$,...).

The algorithm for performing the re-arrangement/indexing of the database satisfies the following steps:

R1. Initialize a tree structure to index empty groups per sub-quantizer, according to a number $b_{group}$ of bits of sub-quantizer centroid representations, , wherein $b_{group}$ may differ per sub-quantizer and may be 0 for at least one sub-quantizer, the index group ids per sub-quantizer being indexed in an increasing order of the binary representation of the corresponding $b_{group}$ bits.
R2. Store each indexed vector into a corresponding index group;
R3. Store the database continuously into memory by doing an in-order Depth-First Search (DFS) tree traversal.

Tree traversal is a form of graph traversal and refers to the process of visiting (examining and/or updating) each node in a tree data structure, exactly once, in a systematic way. Such traversals are classified by the order in which the nodes are visited. For a binary tree, they are defined as display operations recursively at each node, starting with the root node, An in-order (symmetric) depth first tree traversal, one starts at the root (selecting some arbitrary node as the root in the case of a graph) and explores as far as possible along each branch before backtracking.

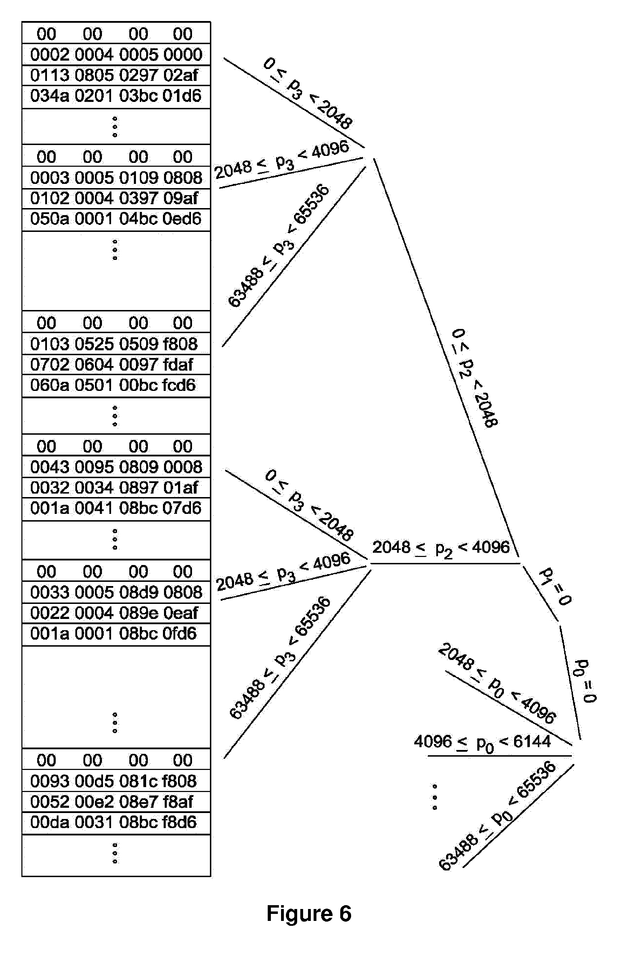

Figure 6 illustrates an exemplary database re-arrangement for the $4 \times 16$ PQ code of Figure 5 according to the present principles. In the figure, each value $p_j$, $j = 1, ...,3$ represents the quantized components for a database vector. The figure shows how the database of Figure 5 would be re-arranged according to each index group, for all sub-quantizers. The gray values are hexadecimal values for index groups of $b_{group}$ = 5 MSB's per sub-quantizer. Hence, the first index group is (00 00 00 00h), the second one is (00 00 00 08h), the third one is (00 00 00 10h), and so on. Observe that the 3 Lowest Significant Bits (LSB) per sub-quantizer of this index group representation (of 2 hex numbers per sub-quantizer) are not a part of the index group (since the index group only contains the 5 MSB's per sub-quantizer) and can assume any value for vectors within an index group. Hence, in the first index group (00 00 00 00h), the re-ordering algorithm places all vectors of the database which satisfy these values for the 5 MSB's of each of their 4 sub-quantized components.

Therefore, the quantified vectors are re-organized so as to group them to preserve the locality of accesses to the distance table during the scan, that is, the vectors within each index group are within close proximity in the distance table. An index group, or a plurality of index groups from the distance table may then be loaded into L1 at a time, and all the vectors within the groups may be searched without a need for another load. Conversely, with the original random order of Figure 5, different portions of the distance table need to be loaded into L1 from one database vector searched to another, since there is no established memory proximity in the distance table among the components of subsequent database vectors.

In an exemplary embodiment for the $4 \times 16$ PQ code, considering that one wants to allocate 1/4th of the L1 cache to each row of the distance table, where the cache size is $M_{L1}$ = 32KB, groups of 2048 symbols, *i.e.*, components of a vector or distance table elements per sub-quantizer row (2048 $\times$ 4 bytes per float = 8 KB) are formed for a total of 32KB for the 4 sub-quantizer rows of the table, which is the size of the L1 cache. Since each row has $2^{16}$ = 65536 columns or elements, this means that the database vectors are dispatched into 65536/2048 = 32 groups (or 5 bits) using their first symbol/component. Then, the vectors of each group are dispatched into 65536/2048 = 32 sub-groups using their second symbol. Then, again sub-sub-groups are formed using their third symbols, and sub-sub-sub-groups using their fourth symbols.

Thanks to this re-organization, lookups can be served by the L1 cache most of the time, thus allowing a performance improvement in speed. The locality of accesses to the distance table is ensured, and the cost of fetching parts of the distance table to the L1 cost is amortized on the scan/search of the complete group, for a large database. It is important to notice that the size of the group decreases exponentially with the level of grouping. For the first symbol, the size of each sub-group is on average M/32 where M is the total number of symbols. After the second symbol, the size of each sub-group is on average M/(32^2). After the third and fourth symbol the size is on average M/(32^3) and M/(32^4).

Since the last sub-group is likely to be very small, it is unlikely that the cost of fetching the part of the distance table considered for the fourth symbol can be amortized. Hence, lookups for the fourth symbols are likely to impact heavily the performance. To deal with this issue, the present principles may test against the best minimum found so far and perform the lookup for the fourth symbol (and possibly the third symbol also) only if the partially evaluated distance is smaller than the best minimum found so far. Otherwise, the evaluation of the distance can be early halted, since the final distance (after looking up values for the third and fourth symbol) would by construction be greater than the minimum known so far. The same test can also be applied before reading the fourth sub-group.

In one embodiment of the present principles, different portions of the cache may be allocated to the different sub-quantizer rows of the distance table, thus altering the size of the groups. For example, 1/2 of the cache can be allocated to the first row of the distance table, 1/4th to the second one, 1/8th to the third one, 1/8th to the fourth one. This avoids having too few elements during the last groupings; or deal with unequally distributed components. Alternately, one can allocate 1/8th of the cache to the first row of the distance table, 1/8th to the second one, 1/8th to the third one, 1/8th to the fourth one. This would keep half of the cache for other purposes (*e.g.,* storing the result, other computations, etc.).

In one embodiment of the present principles, the grouping performed is used to store a list of "groups" of vectors rather than just a list of vectors (as in Figure 6). By storing index groups, the group size is explicitly available, allowing one to not store the corresponding group bits of the components ($b_{group}$), which are already explicitly stored. This allows savings in memory by reducing the storage space needed. It can also provide an advantage with respect to computation performance as a complete index group can be skipped if it can be determined that it cannot contain a vector whose distance to the query vector is smaller than the minimum found so far. For example, by looking at all possible values in the distance table segment corresponding to these 5 MSB's per sub-quantizer, it is possible to find a lower bound for the index group (i.e., the lowest possible value for any vector in the group). If this value is bigger than the best minimum found so far, it is possible to skip the entire index group (*i.e.*, perform no computation for vectors in this group).

In one embodiment of the present principles, distance tables are normalized such that the minimum distance value per sub-quantizer in all tables is zero, as such optimization positively impacts the early halting procedure.

In one embodiment of the present principles, saturated arithmetic (8 bit saturated integer or 16 bit saturated integers) is used in the distance tables instead of floating point numbers (32 bits or 4 bytes), in order to reduce storage and speed up computation.

Overall, on a Haswell processor, the improvements of the present principles permit running tests at 7 GB/s instead of 2.5 GB/s. This allows the system to serve more than 2 times as many requests from one server or answer twice as fast. Simulation results were performed on the dataset ANN_SIFT1B (from IRISA - Institute for Research in IT and Random Systems), which consists of SIFT descriptors (128 bits) and has a base set of 1 billion vectors, a learning set of 100 million vectors and a query set of 10 thousand vectors.

As aforementioned, the advantages of the present principles include lower processing cost and faster answer to queries. Also, as the database is re-organized to form groups of vectors whose first symbols/components are such that the 5 high-order bits of each 16 bit ($2 \times 8$ bit) symbols are identical (32 groups of 2048 elements), it is possible to only store the 11 low-order bits of these first symbols. For an $8 \times 8$ code and a database of 16 million elements, this amount to 25% savings in memory cost (since no compression can be expected for the last 16 bits).

The size of the group may be changed (made larger) so that compression may be more efficient and aligned to a multiple of 8 bits for easier access. For example, 16 groups ($b_{group}$ = 4 bits) of 4096 elements/centroids (12 bits), instead 32 groups ($b_{group}$ = 5 bits) of 2048 elements/centroids (11 bits) for a $4 \times 16$ PQ code. However, this represents a trade-off between speed performance (in the form of the locality of memory accesses) and a decrease in storage cost.

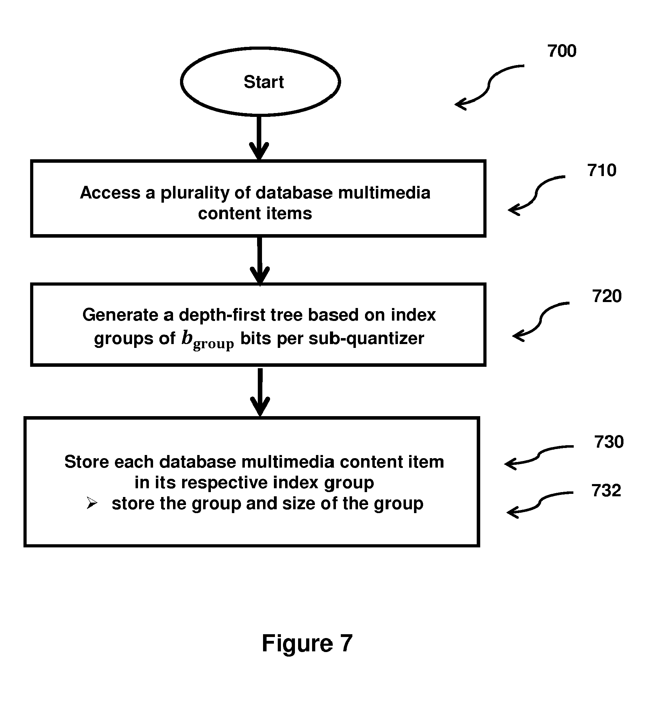

Figure 7 illustrates a flowchart 700 of a method of indexing multimedia content according to the present principles including: accessing 710 a multimedia content database comprising a plurality of database multimedia content items, wherein a multimedia content item (hereby also called vectors, descriptors or descriptor vectors) is represented based on a $m \times b$ Product Quantization (PQ) code; generating 720 a depth-first tree structure based on index groups, each group represented by at least one bit ($b_{group}$) from each sub-quantizer; and storing 730 in memory each database multimedia content item in its respective index group. The tree depth is the number of sub-quantizers $m$. The step of storing may further store the group and size of the group in memory 732.

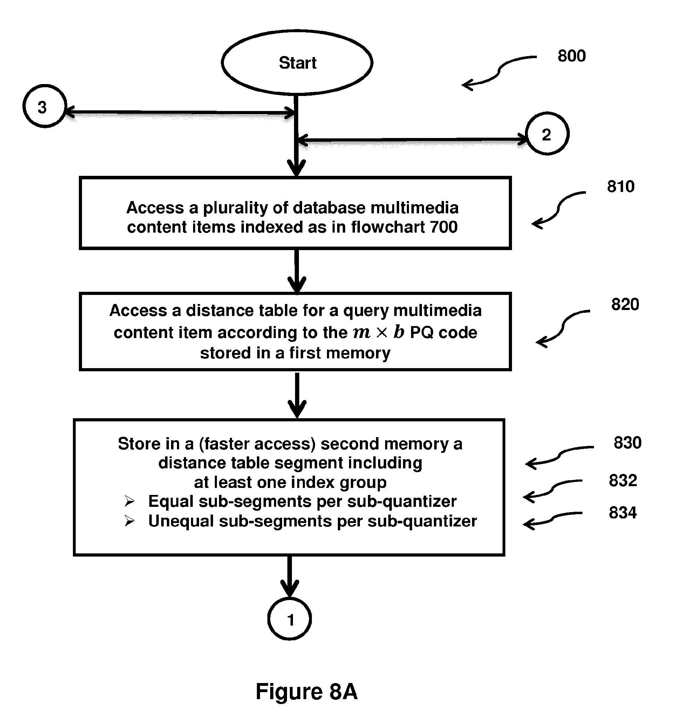

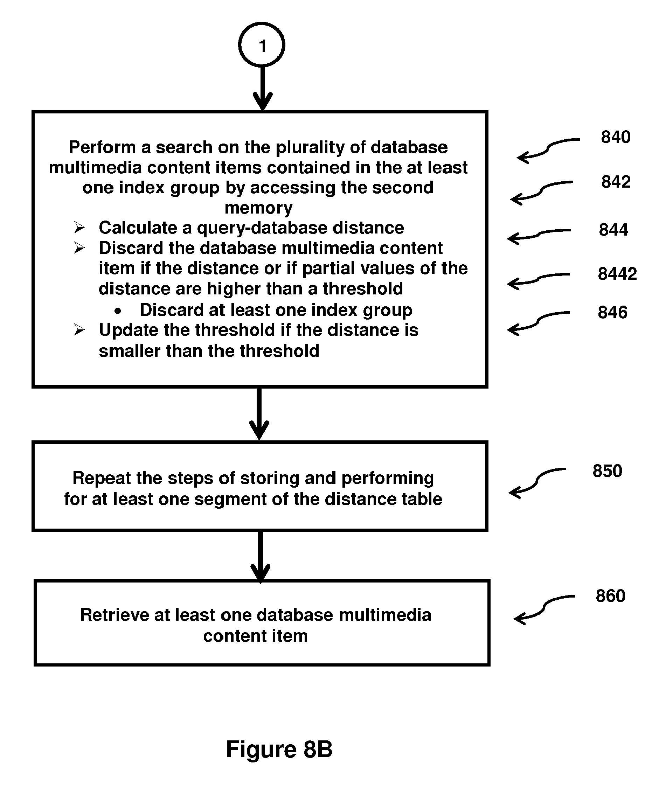

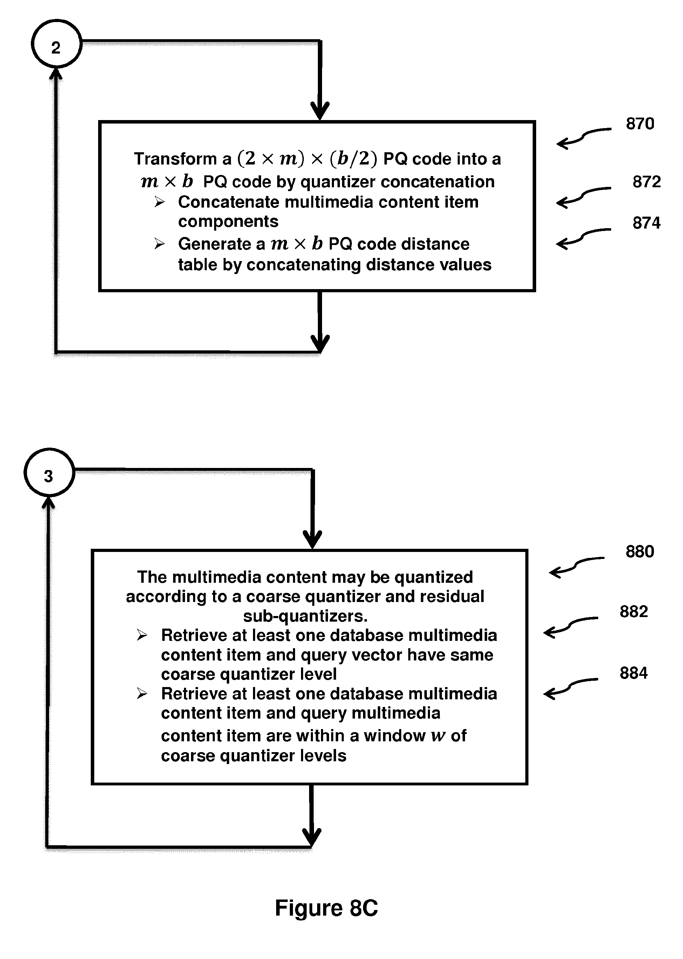

Figure 8 (A, B and C) illustrates a flowchart 800 of a method of multimedia content retrieval according to the present principles including: accessing 810 a multimedia content database comprising a plurality of database multimedia content items, wherein a multimedia content item is represented based on a $m \times b$ Product Quantization (PQ) code and the database multimedia content items are indexed according to the method of flowchart 700; accessing 820 a distance table for a query multimedia content item represented according to the $m \times b$ PQ code, wherein the distance table is stored in at least one first memory and contains a plurality of distances between the query multimedia content item components and $b$-bit represented centroids of the respective sub-quantizers; storing 830 in at least one second memory a distance table segment including at least one index group, wherein the at least one second memory permits a faster access than the at least one first memory; performing 840 a search between the query multimedia content item and the plurality of database multimedia content items contained in the at least one index group by accessing the distance table segment in the at least one second memory; and retrieving 860 at least one database multimedia content item, wherein the at least one database multimedia content item is the closest at least one database multimedia content item from the query multimedia content item. The at least one second memory can be cache, register or similar. The at least one first memory can be cache, RAM, flash or similar. The method may further include: repeating 850 the steps of storing and performing for at least one segment of the distance table.

The step of storing 830 may store equal sub-segments per sub-quantizer of a distance table segment 832 in the at least one second memory. Or it may store unequal sub-segments 834 for each sub-quantizer in the at least one second memory, wherein at least one sub-quantizer sub-segment is larger than another sub-quantizer sub-segment.

The step of performing a search 840 may further include: calculating 842 a query-database distance between a query multimedia content item and a database multimedia content item based on the distance table, wherein the query-database distance is a sum of the distances or squared distances taken from the distance table for each dimension of the database multimedia content item; discarding 844 the database multimedia content item if the query-database distance or if partial values of the distance during the calculating step are higher than a threshold, wherein the threshold is a smallest distance among previously calculated query-database distances; and updating 846 the threshold if the query-database distance is smaller than the threshold. The step of discarding may further include: discarding at least one index group 8442 if no database multimedia content item in the at least one index group may have a distance to the query multimedia content item smaller than the threshold.

The method may further include: transforming 870 a $(2 \times m) \times (b/2)$ PQ code into a $m \times b$ PQ code by quantizer concatenation prior to the step of accessing a plurality of database multimedia content items. The step of transforming includes: concatenating 872 multimedia content item components for each query and database multimedia content item for every 2 out of $2 \times m$ components; and generating 874 a $m \times b$ PQ code distance table by concatenating distance values from the $(2 \times m) \times (b/2)$ PQ code distance table for every 2 out of m sub-quantizers, wherein $d'(c_{i1} \text{¤} c_{i2}) = d(c_{i1}) + d(c_{i2})$; ¤ means bit concatenation of $c_{i1}$ and $c_{i2}$; $c_{i1}$ is the $i$1-th centroid of quantizer 1; $c_{i2}$ is the $i$2-th centroid of quantizer 2 and d(.) is the distance between a centroid and a query multimedia content item component.

The multimedia content may be quantized according to a coarse quantizer 880 and m residual sub-quantizers and is stored in accordance with an inverted file architecture. The retrieved at least one database multimedia content item may have the same coarse quantizer level as the query multimedia content item 882. Or the retrieved at least one database multimedia content item may have a coarse quantizer level within a window w 884 from the coarse quantizer level of the query multimedia content item, wherein the window contains a plurality of coarse quantizer levels.

It is to be understood that the techniques of the present principles may be applied to general search algorithms that rely heavily on lookup into pre-computed tables. In particular, they can be applied to variants and extensions of PQ codes and to compressed or uncompressed multimedia content. In addition, it is to be understood that the present principles may be implemented in various forms of hardware, software, firmware, special purpose processors, or a combination thereof. Preferably, the present principles are implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), at least one memory (*e.g.,* cache memory, register memory, random access memory (RAM), read-only memory (ROM), flash memory, etc.), and/or storage devices (HDD), and at least one input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

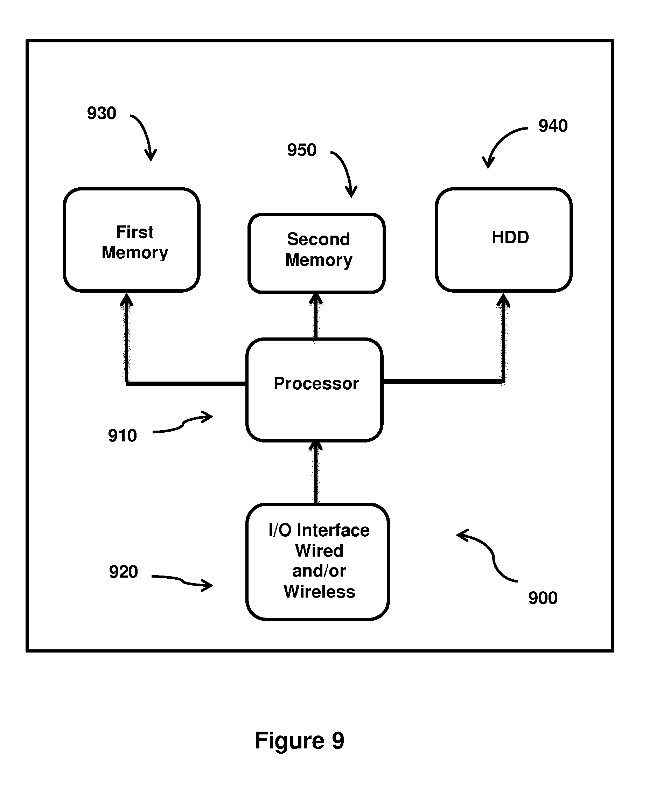

Figure 9 shows a block diagram of a minimum computing environment 900 within which the present principles can be implemented and executed. The computing environment 900 includes a processor 910, and at least one (and preferably more than one) I/O interface 920. The I/O interface can be wired or wireless and, in the wireless implementation is pre-configured with the appropriate wireless communication protocols to allow the computing environment 900 to operate on a global network (*e.g.,* internet) and communicate with other computers or servers (*e.g.,* cloud based computing or storage servers) so as to enable the present principles to be provided, for example, as a Software as a Service (SAAS) feature remotely provided to end users. At least one second memory 950 (*e.g.,* cache memory, register memory, etc.), at least one first memory 930 (*e.g.,* cache memory, random access, read-only, flash memory, etc.) and/or storage devices (HDD) 940 are also provided within the computing environment 900. The computing environment may be used to implement a node or device, and/or a controller or server who operates the storage system. The at least one second memory permits faster access from the processor than the at least one first memory or storage devices. At least one second memory 950 can be a L1 cache or register memory of a processor. The at least one second memory 950 can also be a L2 or L3 cache memory of a processor. The at least one first memory 930 can be a L2 or L3 cache memory of a processor. In addition, the at least first and at least second memories, and storage devices may not be co-located with the processor, and can be part of a distributed network system.

It is to be further understood that, because some of the constituent system components and methods depicted in the accompanying drawings are preferably implemented in software, the actual connections between the system components or the process function blocks may differ depending upon the manner in which the present principles are programmed. Given the teachings herein, one of ordinary skill in the pertinent art will be able to contemplate these and similar implementations or configurations of the present principles.

Although the illustrative embodiments have been described herein with reference to the accompanying drawings, it is to be understood that the present principles is not limited to those precise embodiments, and that various changes and modifications may be effected therein by one of ordinary skill in the pertinent art without departing from the scope of the present principles. All such changes and modifications are intended to be included within the scope of the present principles as set forth in the appended claims.

## Claims

1. A method of indexing multimedia content for the purpose of retrieval, said method comprising:

   accessing (710) a multimedia content database comprising a plurality of database multimedia content items represented according to a $m \times b$ Product Quantization (PQ) code;
   generating (720) a depth-first tree structure of index groups, each group represented by at least one bit per sub-quantizer; and
   storing (730) in memory each database multimedia content item in its respective index group.

2. A method of multimedia content retrieval comprising:

accessing (810) a multimedia content database comprising a plurality of database multimedia content items represented according to a $m \times b$ Product Quantization (PQ) code and indexed according to the method of claim 1;

accessing (820) a distance table for a query multimedia content item represented according to said $m \times b$ PQ code, wherein said distance table is stored in at least one first memory;

storing (830) in at least one second memory a distance table segment comprising at least one index group, wherein said at least one second memory permits a faster access than said at least one first memory;

performing (840) a search between said query multimedia content item and said plurality of database multimedia content items contained in said at least one index group by accessing said at least one second memory; and

retrieving (860) at least one database multimedia content item, wherein said at least one database multimedia content item is the closest at least one database multimedia content item from said query multimedia content item.

3. The method of claim 2, further comprising:

repeating (850) the steps of storing and performing for at least one segment of the distance table.

4. The method of claim 2 or 3, further comprising:

transforming (870) a $(2 \times m) \times (b/2)$ PQ code into a $m \times b$ PQ code by quantizer concatenation prior to the step of accessing a plurality of database multimedia content items.

5. The method of claim 4, wherein the step of transforming (870) further comprises:

concatenating (872) multimedia content item components for each query and database multimedia content item for every 2 out of $2 \times m$ components; and

generating (874) a $m \times b$ PQ code distance table by concatenating distance values from the $(2 \times m) \times (b/2)$ PQ code distance table for every 2 out of $m$ sub-quantizers.

6. The method according to any of the claims 2-6, wherein the step of performing a search (840) further comprises:

calculating (842) a query-database distance between a query multimedia content item and a database multimedia content item based on said distance table;

discarding (844) said database multimedia content item if said query-database distance or if partial values of said distance during said calculating step are higher than a threshold; and

updating (846) said threshold if said query-database distance is smaller than said threshold.

7. The method according to claim 6, wherein the step of discarding (844) may further include:

discarding (8442) at least one index group if no database multimedia content item in said at least one index group may have a distance to the query multimedia content item smaller than the threshold.

8. The method according to any of the claims 2-7, wherein said multimedia content is quantized according to a coarse quantizer (880) and $m$ residual sub-quantizers and is stored in accordance with an inverted file architecture, wherein said retrieved at least one database multimedia content item has a coarse quantizer level within a window $w$ (884) from the coarse quantizer level of said query multimedia content item.

9. An apparatus for indexing multimedia content for the purpose of retrieval, said apparatus 900 comprising a processor 910, for receiving at least one input/output 920; and at least one memory 930 in signal communication with said processor, said processor being configured to:

access a multimedia content database comprising a plurality of database multimedia content items represented according to a $m \times b$ Product Quantization (PQ) code;

generate in said at least one memory a depth-first tree structure of index groups, each group represented by at least one bit per sub-quantizer; and

store in memory each database multimedia content item in its respective index group of said at least one memory.

**10.** An apparatus for multimedia content retrieval, said apparatus (900) comprising a processor (910), for receiving at least one input/output (920); at least one first memory (930), and at least one second memory (950) in signal communication with said processor, wherein said at least one second memory permits faster access from the processor than said at least one first memory, said processor being configured to:

access a multimedia content database comprising a plurality of database multimedia content items represented according to a $m \times b$ Product Quantization (PQ) code and said database multimedia content items are indexed according to the apparatus of claim 9;

access a distance table for a query multimedia content item represented according to said $m \times b$ PQ code, wherein said distance table is stored in said at least one first memory (930);

store in said at least one second memory (950) a distance table segment comprising at least one index group;

perform a search between said query multimedia content item and said plurality of database multimedia content items contained in said at least one index group by accessing said at least one second memory; and

retrieve at least one database multimedia content item, wherein said at least one database multimedia content item is the closest at least one database multimedia content item from said query multimedia content item.

**11.** The apparatus of claim 10, wherein the processor is further configured to:

store and perform a search for at least one segment of the distance table.

**12.** The apparatus of claim 10 or 11, wherein the processor is further configured to:

transform a $(2 \times m) \times (b/2)$ PQ code into a $m \times b$ PQ code by quantizer concatenation prior to accessing a plurality of database multimedia content items.

**13.** The apparatus of claim 12, wherein the processor transforms by being further configured to:

concatenate multimedia content item components for the query and database multimedia content items for every 2 out of $2 \times m$ components; and

generate a $m \times b$ PQ code distance table by concatenating distance values from the $(2 \times m) \times (b/2)$ PQ code distance table for every 2 out of $m$ sub-quantizers.

**14.** The apparatus according to any of the claims 10-13, wherein the processor performs a search by being further configured to:

calculate a query-database distance between a query multimedia content item and a database multimedia content item based on said distance table;

discard said database multimedia content item if said query-database distance or if partial values of said distance during the calculation are higher than a threshold; and

update said threshold if said query-database distance is smaller than said threshold.

**15.** The apparatus according to claim 14, wherein the processor discards by being further configured to:

discard at least one index group if no database multimedia content item in said at least one index group may have a distance to the query multimedia content item smaller than the threshold.

Figure 1

Figure 2

**Figure 3**

## Database in memory

|  | j' = 0 | 1 |
|---|---|---|
| n = 0 | 00020004 | 00050000 |
| 1 | f21a0001 | 08bc08d6 |
| ⋮ | ⋮ | ⋮ |

## Distance table

| | i' = 00000000h | 00000001h | 00010000h | ... |
|---|---|---|---|---|
| j' = 0 | 0+9=9 | 0+7=7 | 1+9=10 | ... |
| 1 | 5+2=7 | 5+3=8 | 8+2=10 | ... |

Figure 4

| | | | |
|---|---|---|---|
| 0002 | 0004 | 0005 | 0000 |
| 0003 | 0005 | 0109 | 0808 |
| 0102 | 0004 | 0397 | 09af |
| f21a | 0001 | 08bc | 08d6 |
| f21a | 0101 | 08bc | 08d6 |
| 0e52 | 00e2 | 08e7 | f8af |
| 0103 | 0525 | 0509 | f808 |
| 3b93 | 00d5 | 081c | f808 |
| 1022 | 0004 | 089e | 08af |
| d1da | 1331 | 08bc | f8d6 |
| 3b93 | 0ad5 | 081c | f808 |
| 00da | 0031 | 08bc | f8d6 |
| d1da | ed31 | 08bc | f8d6 |
| 0702 | 0604 | 0097 | fdaf |
| 0033 | 0005 | 08d9 | 0808 |
| 0052 | 00e2 | 08e7 | f8af |
| 0e52 | fee2 | 08e7 | f8af |
| 0113 | 0805 | 0297 | 02af |
| 001a | 0001 | 08bc | 0fd6 |
| 034a | 0201 | 03bc | 01d6 |
| 001a | 0041 | 08bc | 07d6 |
| 1022 | f004 | 089e | 08af |
| 0043 | 0095 | 0809 | 0008 |
| | | ⋮ | |

Figure 5

| 00 | 00 | 00 | 00 |
|---|---|---|---|
| 0002 | 0004 | 0005 | 0000 |
| 0113 | 0805 | 0297 | 02af |
| 034a | 0201 | 03bc | 01d6 |

$\vdots$

| 00 | 00 | 00 | 00 |
|---|---|---|---|
| 0003 | 0005 | 0109 | 0808 |
| 0102 | 0004 | 0397 | 09af |
| 050a | 0001 | 04bc | 0ed6 |

$\vdots$

| 00 | 00 | 00 | 00 |
|---|---|---|---|
| 0103 | 0525 | 0509 | f808 |
| 0702 | 0604 | 0097 | fdaf |
| 060a | 0501 | 00bc | fcd6 |

$\vdots$

| 00 | 00 | 00 | 00 |
|---|---|---|---|
| 0043 | 0095 | 0809 | 0008 |
| 0032 | 0034 | 0897 | 01af |
| 001a | 0041 | 08bc | 07d6 |

$\vdots$

| 00 | 00 | 00 | 00 |
|---|---|---|---|
| 0033 | 0005 | 08d9 | 0808 |
| 0022 | 0004 | 089e | 0eaf |
| 001a | 0001 | 08bc | 0fd6 |

$\vdots$

| 00 | 00 | 00 | 00 |
|---|---|---|---|
| 0093 | 00d5 | 081c | f808 |
| 0052 | 00e2 | 08e7 | f8af |
| 00da | 0031 | 08bc | f8d6 |

$\vdots$

$0 \leq p_3 < 2048$

$2048 \leq p_3 < 4096$

$63488 \leq p_3 < 65536$

$0 \leq p_3 < 2048$

$2048 \leq p_3 < 4096$

$63488 \leq p_3 < 65536$

$0 \leq p_2 < 2048$

$2048 \leq p_2 < 4096$

$p_1 = 0$

$p_0 = 0$

$2048 \leq p_0 < 4096$

$4096 \leq p_0 < 6144$

$63488 \leq p_0 < 65536$

**Figure 6**

700

Start

710

Access a plurality of database multimedia
content items

720

Generate a depth-first tree based on index
groups of $b_{\mathrm{group}}$ bits per sub-quantizer

730

Store each database multimedia content item
in its respective index group
➢  store the group and size of the group

732

**Figure 7**

Start

3

2

800

**Access a plurality of database multimedia content items indexed as in flowchart 700**

810

**Access a distance table for a query multimedia content item according to the $m \times b$ PQ code stored in a first memory**

820

**Store in a (faster access) second memory a distance table segment including at least one index group**
- ➤ **Equal sub-segments per sub-quantizer**
- ➤ **Unequal sub-segments per sub-quantizer**

830

832

834

1

**Figure 8A**

①

Perform a search on the plurality of database
multimedia content items contained in the at least
one index group by accessing the second
memory
➢ Calculate a query-database distance
➢ Discard the database multimedia content
item if the distance or if partial values of the
distance are higher than a threshold
• Discard at least one index group
➢ Update the threshold if the distance is
smaller than the threshold

840

842

844

8442

846

Repeat the steps of storing and performing
for at least one segment of the distance table

850

Retrieve at least one database multimedia
content item

860

Figure 8B

② ────────────────┐
                    │
                    ▼
┌─────────────────────────────────────┐      ← 870
│  Transform a $(2 \times m) \times (b/2)$ PQ code into a
│  $m \times b$  PQ code by quantizer concatenation      ← 872
│    ➤ Concatenate multimedia content item
│      components                                          ← 874
│    ➤ Generate a $m \times b$ PQ code distance
│      table by concatenating distance values
└─────────────────────────────────────┘
                    │
                    ▼

③ ────────────────┐
                    │
                    ▼
┌─────────────────────────────────────┐      ← 880
│    The multimedia content may be quantized
│  according to a coarse quantizer and residual
│              sub-quantizers.                             ← 882
│    ➤ Retrieve at least one database multimedia
│      content item and query vector have same
│      coarse quantizer level                             ← 884
│    ➤ Retrieve at least one database multimedia
│      content item and query multimedia
│      content item are within a window $w$ of
│      coarse quantizer levels
└─────────────────────────────────────┘
                    │
                    ▼

## Figure 8C

Figure 9

Europäisches
Patentamt

European
Patent Office

Office européen
des brevets

**EUROPEAN SEARCH REPORT**

Application Number

EP 15 30 6124

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BERCHTOLD S ET AL: "Independent quantization: an index compression technique for high-dimensional data spaces", DATA ENGINEERING, 2000. PROCEEDINGS. 16TH INTERNATIONAL CONFERENCE ON SAN DIEGO, CA, USA 29 FEB.-3 MARCH 2000, LOS ALAMITOS, CA, USA,IEEE COMPUT. SOC, US, 29 February 2000 (2000-02-29), pages 577-588, XP010378755, DOI: 10.1109/ICDE.2000.839456 ISBN: 978-0-7695-0506-0 * page 577 - page 586 * | 1-15 | INV. G06F17/30 |
| X | Prerana Karnik ET AL: "A survey on Content based Image Retrieval using Vector Quantization", International Journal of Computer Applications, 1 January 2013 (2013-01-01), pages 975-8887, XP055219678, Retrieved from the Internet: URL:http://research.ijcaonline.org/icrtet/number4/icrtet1343.pdf [retrieved on 2015-10-09] * page 18 - page 21 * | 1-15 | TECHNICAL FIELDS SEARCHED (IPC) G06F |

The present search report has been drawn up for all claims

| Place of search | Date of completion of the search | Examiner |
|---|---|---|
| Munich | 9 October 2015 | Korkuzas, Valdas |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• **H. JEGÓU ; M. DOUZE ; C. SCHMID.** Product Quantization for Nearest Neighbor Search. *IEEE Transactions on Pattern Analysis and Machine Intelligence,* 2011, vol. 33 (1), 117-128